# FASCICULE DE BREVET EUROPEEN

(11) **EP 2 050 679 B1**
(45) Date de publication et mention de la délivrance du brevet: **02.06.2010**
(21) Numéro de dépôt: 08165950.0
(22) Date de dépôt: 06.10.2008
(51) Int. Cl.: B65D 5/02

(54) **Moyens d'ouverture/fermeture d'un conduit delimité par deux pièces**
Öffnungs-/Schließmittel einer Rohrleitung, die durch zwei Teile begrenzt ist
Means for opening/closing a conduit delimited by two parts

(30) Priorité: 16.10.2007 FR 0707223
(43) Date de publication de la demande: 22.04.2009
(73) Titulaire: Frolin, Nicolas, 69004 Lyon (FR)
(72) Inventeur: Frolin, Nicolas, 69004 Lyon (FR)
(74) Mandataire: Jeannet, Olivier

(56) Documents cités:
- US-A- 1 431 918
- US-A- 2 474 120

## Description

La présente invention concerne des moyens d'ouverture/fermeture d'un conduit délimité par deux pièces. Ce moyen de fermeture peut notamment équiper un récipient, l'une des pièces formant un corps de récipient et l'autre pièce formant une bague de commande de l'ouverture d'écoulement de produit contenu dans le corps de récipient.

Les documents US 2,474,120 ou US 1,431,918 décrivent des dispositifs de fermeture de l'extrémité d'une enveloppe en matériau flexible par vrillage de l'extrémité libre de l'enveloppe, selon l'axe longitudinal de cette enveloppe, par rapport au reste de l'enveloppe, de manière à former un diaphragme. Des pattes latérales de dimensions réduites, adhésives ou élastiques, sont prévues pour maintenir l'extrémité libre vrillée par rapport au reste de l'enveloppe.

Les dispositifs selon ces documents ont pour inconvénients d'être relativement onéreux à fabriquer, peu simple à manipuler et non parfaitement étanche.

L'invention a pour objectif de fournir des moyens d'ouverture/fermeture d'un conduit délimité par deux pièces, remédiant à ces inconvénients.

Ces moyens comprennent, de manière connue en soi :
- deux pièces de conduit coaxiales, dont au moins une est mobile par rapport à l'autre dans le sens axial et en pivotement selon l'axe du conduit ;
- un manchon en matière souple, reliant les deux pièces de conduit, pouvant être déformé par vrillage, entre un état de vrillage, dans lequel il obture le conduit, et un état de non vrillage, dans lequel il libère le conduit, et
- des organes de positionnement des pièces de conduit, permettant de maintenir ces pièces de conduit l'une par rapport à l'autre dans une position de fermeture du conduit

Selon l'invention,
- lesdits organes de positionnement sont sous forme de deux séries respectives d'organes de calage aménagés sur des bords respectifs des deux pièces de conduit situés en regard l'un de l'autre, les organes de calage d'une série étant propres à venir en prise avec les organes de calage de l'autre série selon une pluralité de positions angulaires des pièces de conduit l'une par rapport à l'autre, et à caler ces pièces de conduit dans au moins deux positions, à savoir une position d'obturation du conduit et au moins une position d'ouverture au moins partielle du conduit ; et
- le manchon est en matière élastique et est apte à être déformé élastiquement dans le sens axial, entre une position normale dans laquelle il maintient les deux pièces de conduit en position rapprochée l'une de l'autre, les organes de calage respectifs étant, dans cette position, en prise les uns avec les autres, et une position d'étirement, dans laquelle les deux pièces de conduit sont en position éloignée l'une de l'autre et les organes de calage respectifs sont hors de prise, permettant le pivotement d'une pièce de conduit par rapport à l'autre.

En position de fermeture du conduit, le manchon maintient les deux pièces de conduit en position rapprochée l'une de l'autre et est vrillé. La venue en prise desdits organes de calage respectifs permet de maintenir les pièces de conduit dans la position angulaire de vrillage du manchon, à l'encontre du rappel élastique du matériau constituant ce manchon. L'ouverture du conduit est réalisée en éloignant une pièce de conduit de l'autre pièce de conduit, de manière à amener les organes de calage respectifs hors de prise, puis en faisant pivoter l'une des pièces de conduit par rapport à l'autre de manière à dévriller le manchon et à libérer ainsi le conduit ; la pièce de conduit ayant été éloignée peut alors être relâchée, amenant le manchon à ramener les deux pièces de conduit en position rapprochée l'une de l'autre et amenant ainsi à nouveau les organes de calage en prise mutuelle pour maintenir les deux pièces de conduit dans cette position d'ouverture du conduit.

Des opérations inverses sont mises en oeuvre pour réaliser la fermeture du conduit.

De préférence, lesdits organes de calage sont conformés pour permettre de caler les pièces de conduit dans au moins une position intermédiaire entre lesdites positions d'ouverture au moins partielle du conduit et de fermeture du conduit.

Cette position intermédiaire permet ainsi une pluralité de degrés d'ouverture du conduit et donc un contrôle d'un écoulement se produisant au travers de ce conduit.

Lesdits organes de calage sont avantageusement conformés pour permettre de caler les pièces de conduit dans une pluralité de positions intermédiaires.

Un contrôle élargi d'un écoulement se produisant au travers de ce conduit est ainsi rendu possible.

Selon une forme particulière de réalisation de l'invention, lesdits organes de calage sont sous forme de couronnes de dents aménagées sur les bords des deux pièces de conduit situés en regard l'un de l'autre, ces dents s'interpénétrant en position de rapprochement de ces deux pièces de conduit.

Selon une autre forme de réalisation possible de l'invention, lesdits organes de calage comprennent des créneaux aménagés sur les bords des deux pièces de conduit situés en regard l'un de l'autre, ces créneaux s'interpénétrant en position de rapprochement de ces deux pièces de conduit.

Les pièces de conduit peuvent comprendre des repères indiquant les positions de vrillage et de non vrillage du manchon, et donc les positions d'ouverture au moins partielle du conduit et de fermeture de ce conduit.

Les pièces de conduit peuvent être en tout matériau approprié, notamment en matière synthétique courante.

Le manchon peut également être en tout matériau approprié, notamment en polymère tels que du caoutchouc, du latex, du silicone, etc.

Dans une application préférentielle, l'une des pièces de conduit forme un corps de récipient et l'autre pièce de conduit forme, à une extrémité de ce corps de récipient, une bague de commande de l'ouverture et de la fermeture du récipient.

L'invention sera bien comprise, et d'autres caractéristiques et avantages de celle-ci apparaîtront, en référence au dessin schématique annexé, représentant, à titre d'exemples non limitatifs, deux formes de réalisation possibles d'un récipient incluant les moyens d'ouverture/fermeture qu'elle concerne.
La figure 1 est une vue de ce récipient de dessus, en position de fermeture, selon une première forme de réalisation ;
la figure 2 en est une vue de côté, dans la même position ;
les figures 3, 5 et 7, et 4, 6 et 8 en sont des vues respectivement similaires aux figures 1 et 2, au cours de son ouverture, à savoir dans deux positions intermédiaires et dans la position d'ouverture, et
les figures 9 et 10 sont des vues du récipient respectivement similaires aux figures 1 et 2, selon la deuxième forme de réalisation.

Par simplification, les parties ou éléments d'une forme de réalisation qui se retrouvent de manière identique ou similaire dans une autre forme de réalisation seront identifiés par les mêmes références numériques et ne seront pas à nouveau décrits.

Les figures représentent un récipient 1 formé d'une première pièce 2, d'une deuxième pièce 3 et d'un manchon 4.

La pièce 2 est de forme cylindrique et comprend un fond et une paroi périphérique. Ce fond et cette paroi délimitent un logement pouvant contenir un produit quelconque, notamment un produit pulvérulent. Sur son bord tourné vers la pièce 3, elle comprend une couronne de dents 5 de forme triangulaire.

La pièce 3 est aussi de forme cylindrique et comprend une paroi périphérique, mais pas de fond, de telle sorte qu'elle délimite un conduit permettant l'écoulement du produit contenu dans la pièce 2. Sur son bord tourné vers la pièce 2, elle comprend une couronne de dents 5 de forme triangulaire.

Le manchon 4 est en une matière souple et élastique, notamment en caoutchouc, latex ou similaire. Il relie les deux pièces 2 et 3, coaxialement, et est fixé à l'ensemble de la périphérie de ces pièces 2 et 3, de sorte qu'il permet une communication étanche du logement défini par la pièce 2 avec le conduit défini par la pièce 3.

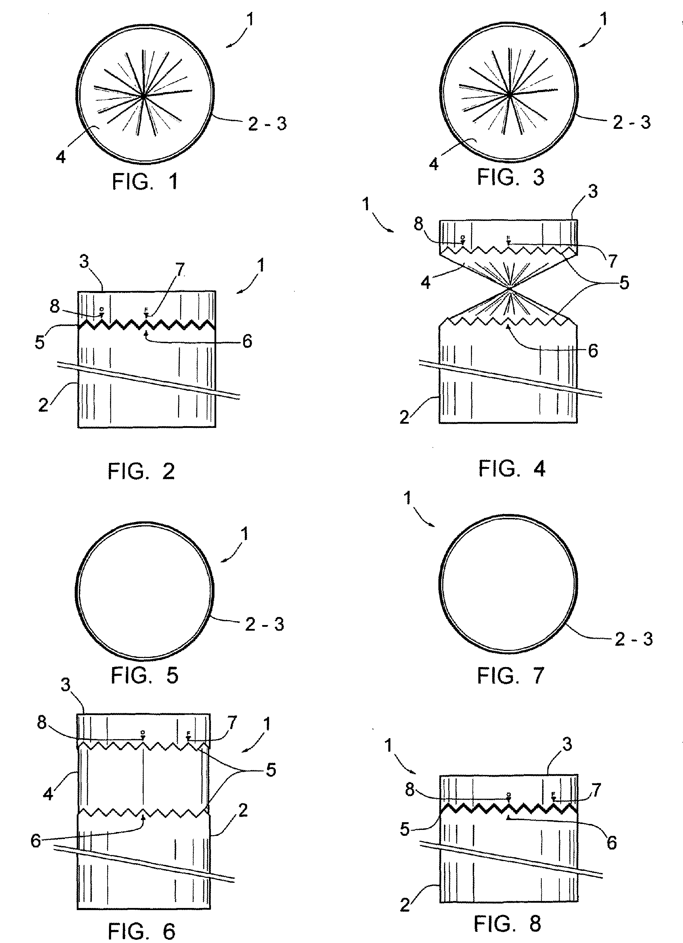

Ce manchon 4 peut être déformé élastiquement dans le sens axial et en vrillage ; dans le sens axial, il est déformable entre une position normale, de repos, dans laquelle il maintien les deux pièces 2, 3 en position rapprochée l'une de l'autre (cf. figures 2 et 8), les dents 5 respectives étant, dans cette position, mutuellement en prise, et une position d'allongement, dans laquelle les deux pièces de conduit 2, 3 sont en position éloignée l'une de l'autre (cf. figures 4 et 6) et les dents 5 respectives sont hors de prise, permettant le pivotement d'une pièce 2, 3 par rapport à l'autre 3, 2. Dans le sens du vrillage, le manchon 4 est déformable entre un état de vrillage (cf. figures 1 et 4), dans lequel il obture le conduit délimité par les pièces 2, 3, et un état de non vrillage (cf. figures 6 et 8), dans lequel il libère ce conduit.

La pièce 2 comporte un repère de référence 6 situé juste en dessous des dents 5 et la pièce 3 comporte deux repères de référence 7 et 8 (signalés respectivement sur la pièce 3 par les lettres F et O pour "fermé" et "ouvert") situés juste au dessus des dents 5. L'alignement des repères 6 et 7 permet de repérer la position de vrillage du manchon 4, et l'alignement des repères 6 et 8 permet de repérer la position de non village du manchon 4.

En pratique, en position de fermeture du conduit, le manchon 4 est vrillé et maintient les deux pièces 2 et 3 en position rapprochée l'une de l'autre. La venue en prise des dents 5 respectives permet de maintenir les pièces 2 et 3 dans la position angulaire de vrillage du manchon 4, à l'encontre du rappel élastique du matériau constituant ce manchon 4.

L'ouverture du conduit est réalisée en éloignant les pièces de conduit 2, 3 l'une de l'autre, de manière à amener les dents 5 hors de prise, puis en faisant pivoter l'une de ces pièces 2, 3 par rapport à l'autre de manière à dévriller le manchon 4 et à libérer ainsi le conduit ; la pièce de conduit 2 ayant été éloignée peut alors être relâchée, amenant le manchon 4 à ramener les deux pièces 2 et 3 en position rapprochée l'une de l'autre et amenant ainsi à nouveau les dents 5 en prise mutuelle pour maintenir les deux pièces 2 et 3 dans cette position d'ouverture du récipient 1.

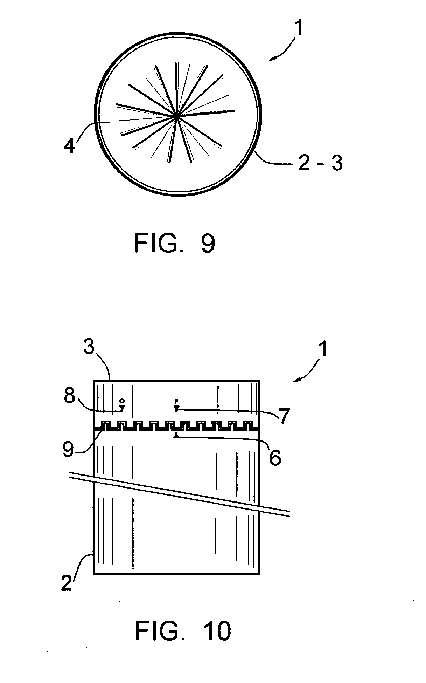

Les figures 9 et 10 montrent une deuxième forme de réalisation très similaire à celle décrite ci-dessus en référence aux figures 1 à 8 ; dans ce cas, les dents triangulaires 5 sont remplacées par des créneaux 9. En position de fermeture du récipient 1, les créneaux 9 de l'une des pièces 2, 3 pénètrent dans les espaces délimités par des créneaux 9 adjacents de l'autre pièce 3, 2 et réciproquement.

Comme cela apparaît de ce qui précède, l'invention fournit des moyens d'ouverture/fermeture d'un conduit délimité par deux pièces, présentant les avantages déterminants d'être à la fois peu onéreux à fabriquer, simples à manipuler et parfaitement étanches, et d'avoir un fonctionnement original, de nature à être attractif pour un consommateur.

L'invention a été décrite ci-dessus en référence à des formes de réalisation données à titre de purs exemples. Il va de soi qu'elle n'est pas limitée à ces formes de réalisation mais qu'elle s'étend à toutes les formes de réalisations couvertes par les revendications ci-annexées. Ainsi, l'invention ne se limite pas à une application à l'ouverture/fermeture d'un récipient, mais peut trouver d'autres applications, telle qu'une application à la fermeture d'un conduit ou tuyau engagé au travers des pièces de conduit précitées, le manchon venant, lors de son vrillage, exercer une constriction dudit conduit ou tuyau, assurant la fermeture de ce dernier, ou une application à la réalisation d'une étanchéité par rapport à une pièce engagée aux travers desdites pièces de conduit, les moyens selon l'invention formant alors un "presse-étoupe".

## Revendications

1. Moyens d'ouverture/fermeture d'un conduit délimité par deux pièces (2, 3), comprenant :
- deux pièces de conduit (2, 3) coaxiales, dont au moins une est mobile par rapport à l'autre dans le sens axial et en pivotement selon l'axe du conduit ;
- des moyens (5 ; 9) de positionnement des pièces de conduit (2, 3), permettant de maintenir ces pièces de conduit (2, 3) l'une par rapport à l'autre dans une position de fermeture du conduit, et
- un manchon (4) en matière souple, reliant les deux pièces de conduit (2, 3), pouvant être déformé par vrillage, entre un état de vrillage, dans lequel il obture le conduit, et un état de non vrillage, dans lequel il libère le conduit ;
**caractérisés en ce que** :
- lesdits organes de positionnement sont sous forme de deux séries respectives d'organes de calage (5 ; 9) aménagés sur des bords respectifs des deux pièces de conduit (2, 3) situés en regard l'un de l'autre, les organes de calage (5 ; 9) d'une série étant propres à venir en prise avec les organes de calage (5 ; 9) de l'autre série selon une pluralité de positions angulaires des pièces de conduit (2, 3) l'une par rapport à l'autre, et à caler ces pièces de conduit (2, 3) dans au moins deux positions, à savoir une position d'obturation du conduit et au moins une position d'ouverture au moins partielle du conduit ; et
- le manchon (4) est en matière élastique et est apte à être déformé élastiquement dans le sens axial, entre une position normale dans laquelle il maintient les deux pièces de conduit (2, 3) en position rapprochée l'une de l'autre, les organes de calage (5 ; 9) respectifs étant, dans cette position, en prise les uns avec les autres, et une position d'étirement, dans laquelle les deux pièces de conduit (2, 3) sont en position éloignée l'une de l'autre et les organes de calage (5 ; 9) respectifs sont hors de prise, permettant le pivotement d'une pièce de conduit (2, 3) par rapport à l'autre.

2. Moyens selon la revendication 1, **caractérisés en ce que** lesdits organes de calage (5 ; 9) sont conformés pour permettre de caler les pièces de conduit (2, 3) dans au moins une position intermédiaire entre lesdites positions d'ouverture au moins partielle du conduit et de fermeture du conduit.

3. Moyens selon la revendication 2, **caractérisés en ce que** lesdits organes de calage (5 ; 9) sont conformés pour permettre de caler les pièces de conduit (2, 3) dans une pluralité de positions intermédiaires.

4. Moyens selon l'une des revendications 1 à 3, **caractérisés en ce que** lesdits organes de calage sont sous forme de couronnes de dents (5) aménagées sur les bords des deux pièces de conduit (2, 3) situés en regard l'un de l'autre, ces dents (5) s'interpénétrant en position de rapprochement de ces deux pièces de conduit (2, 3).

5. Moyens selon l'une des revendications 1 à 3, **caractérisés en ce que** lesdits organes de calage comprennent des créneaux (9) aménagés sur les bords des deux pièces de conduit (2, 3) situés en regard l'un de l'autre, ces créneaux (9) s'interpénétrant en position de rapprochement de ces deux pièces de conduit (2, 3).

6. Moyens selon l'une des revendications 1 à 5, **caractérisés en ce que** les pièces de conduit (2, 3) comprennent des repères (6, 7, 8) indiquant les positions de vrillage et de non vrillage du manchon (4), et donc les positions d'ouverture au moins partielle du conduit et de fermeture de ce conduit.

7. Moyens selon l'une des revendications 1 à 6, **caractérisés en ce que** l'une des pièces de conduit (2, 3) forme un corps de récipient (1) et l'autre pièce de conduit forme, à une extrémité de ce corps de récipient, une bague de commande de l'ouverture et de la fermeture du récipient (1).

## Claims

1. Means for opening/closing a conduit delimited by two parts (2, 3), comprising:
- two coaxial conduit parts (2, 3), at least one of which can move relative to the other in the axial direction and pivot around the axis of the conduit;
- means (5; 9) for positioning the conduit parts (2, 3), permitting the conduit parts (2, 3) to be maintained at a closed position of the conduit relative to each other, and
- a sleeve (4) composed of flexible material, linking the two conduit parts (2, 3), being able to be deformed by twisting, between a twisted state in which the conduit is closed and a non-twisted state in which the conduit is opened;
**characterized in that**:
- said positioning members are in the form of two respective series of keying members (5; 9) arranged on respective edges of the two conduit parts (2, 3) located opposite one another, the keying members (5; 9) of one series being designed to engage with the keying members (5; 9) of the other series according to a plurality of angular positions of the conduit parts (2, 3) relative to each other, and to fix the conduit parts (2, 3) in at least two positions, that is to say a closed position of the conduit and at least one at least partially opened position of the conduit; and
- the sleeve (4) is composed of elastic material and is able to be deformed elastically in the axial direction, between a normal position in which it maintains the two conduit parts (2, 3) in a drawn-together position, the respective keying members (5; 9), in this position, being engaged with one another, and a stretching position in which the two conduit parts (2, 3) are in an elongated position relative to each other and the respective keying members (5; 9) are disengaged, permitting one conduit part (2, 3) to pivot with respect to the other.

2. Means according to claim 1, **characterized in that** said keying members (5; 9) are formed to enable the conduit parts (2, 3) to be fixed in at least one intermediate position between said at least partially opened position of the conduit and closed position of the conduit.

3. Means according to claim 2, **characterized in that** said keying members (5; 9) are formed to enable the conduit parts (2, 3) to be fixed in a plurality of intermediate positions.

4. Means according to any one of claims 1 to 3, **characterized in that** said keying members are in the form of gear teeth (5) arranged on the edges of the two conduit parts (2, 3) located opposite one another, these teeth (5) interpenetrating in a position drawing together the two conduit parts (2, 3).

5. Means according to any one of claims 1 to 3, **characterized in that** said keying members comprise crenellations (9) arranged on the edges of the two conduit parts (2, 3) located opposite one another, the crenellations (9) interpenetrating in a cooperating position of the two conduit parts (2, 3).

6. Means according to any one of claims 1 to 5, **characterized in that** the conduit parts (2, 3) comprise reference marks (6, 7, 8) indicating the twisting and non-twisting positions of the sleeve (4), and hence the at least partially opened position of the conduit and closed position of this conduit.

7. Means according to any one of claims 1 to 6, **characterized in that** one of the conduit parts (2, 3) forms a container (1) and the other part, at one end of this container, forms a control ring for opening and closing of the container (1).

## Patentansprüche

1. Mittel zum Öffnen/Schließen eines durch zwei Teile (2, 3) abgegrenzten Rohrkanals mit:
- zwei koaxialen Rohrkanalteilen (2, 3), von denen wenigstens eines relativ zum anderen in Axialrichtung beweglich und zur Rohrkanalachse schwenkbar ist,
- Mitteln (5, 9) zur Positionierung der Rohrkanalteile (2, 3), welche das Halten der Rohrkanalteile (2, 3) zueinander in einer Schließstellung des Rohrkanals erlauben, und
- einer Manschette (4) aus einem flexiblen Material, welche die beiden Rohrkanalteile (2, 3) verbindet und durch Verdrehen zwischen einem verdrehten Zustand, in welchem sie den Rohrkanal verschließt, und einem nicht verdrehten Zustand, in welchem sie den Rohrkanal freigibt, verformt werden kann,
**dadurch gekennzeichnet, dass**
- die Positionierelemente in Form zweier Folgen von Einstellelementen (5, 9) ausgebildet sind, welche auf den jeweiligen Rändern der beiden Rohrkanalteile (2, 3) gegenüber einander angeordnet sind, wobei die Einstellelemente (5, 9) einer Folge mit den Einstellelementen (5, 9) der anderen Folge in einer Vielzahl von Winkelstellungen zueinander in Eingriff kommen und die Rohrkanalteile (2, 3) in wenigstens zwei Positionen einstellen können, nämlich einer Schließstellung des Rohrkanals und wenigstens einer wenigstens teilweisen Öffnungsstellung des Rohrkanals, und
- die Manschette (4) aus einem elastischen Material besteht und in axialer Richtung zwischen einer Normalstellung, in welcher sie die beiden Rohrkanalteile (2, 3) in einer einander angenäherten Position hält, wobei die jeweiligen Einstellelemente (5, 9) in dieser Stellung in Eingriff miteinander stehen, und einer auseinander gezogenen Stellung, in welcher die beiden Rohrkanalteile (2, 3) sich in einer voneinander entfernten Stellung befinden und die jeweiligen Einstellelemente (5, 9) außer Eingriff stehen, was das Verschwenken eines Rohrkanalteils (2, 3) gegenüber dem anderen erlaubt, elastisch verformt werden kann.

2. Mittel nach Anspruch 1, **dadurch gekennzeichnet, dass** die Einstellelemente (5, 9) so ausgebildet sind, dass sie die Einstellung der Rohrkanalteile (2, 3) in wenigstens einer Zwischenstellung zwischen der zumindest teilweisen Öffnungsstellung des Rohrkanals und der Schließstellung des Rohrkanals erlauben.

3. Mittel nach Anspruch 2, **dadurch gekennzeichnet, dass** die Einstellelemente (5, 9) so ausgebildet sind, dass sie die Einstellung der Rohrkanalteile (2, 3) in einer Vielzahl von Zwischenstellungen erlauben.

4. Mittel nach einem der Ansprüche 1 bis 3, **dadurch gekennzeichnet, dass** die Einstellelemente in Form von auf den Rändern der beiden Rohrkanalteile (2, 3) gegenüber angeordneten Zahnkränzen (5) ausgebildet sind, wobei die Zähne (5) in der angenäherten Stellung der beiden Rohrkanalteile (2, 3) ineinander greifen.

5. Mittel nach einem der Ansprüche 1 bis 3, **dadurch gekennzeichnet, dass** die Einstellelemente auf den Rändern der beiden Rohrkanalteile (2, 3) gegenüber angeordnete Rechteckzinnen (9) aufweisen, wobei die Rechteckzinnen (9) in der angenäherten Stellung der beiden Rohrkanalteile (2, 3) ineinander greifen.

6. Mittel nach einem der Ansprüche 1 bis 5, **dadurch gekennzeichnet, dass** die Rohrkanalteile (2, 3) Markierungen (6, 7, 8) aufweisen, welche die verdrehte und die nicht verdrehte Stellung der Manschette (4) und somit die zumindest teilweise Öffnungsstellung des Rohrkanals und der Schließstellung des Rohrkanals anzeigen.

7. Mittel nach einem der Ansprüche 1 bis 6, **dadurch gekennzeichnet, dass** das eine der Rohrkanalteile (2, 3) einen Behälterkörper (1) und das andere Rohrkanalteil an einem Ende des Behälterkörpers einen Stellring für das Öffnen und Schließen des Behälters (1) bildet.
